Europäisches Patentamt

European Patent Office

Office européen des brevets

(19)

(11) Numéro de publication : **0 277 856 B1**

(12) **FASCICULE DE BREVET EUROPEEN**

(45) Date de publication du fascicule du brevet :
07.08.91 Bulletin 91/32

(51) Int. Cl.⁵ : **C08F 14/06,** C08F 2/02,
B01J 19/18

(21) Numéro de dépôt : 88400071.2

(22) Date de dépôt : 14.01.88

(54) **Procédé de préparation en masse de polymères et copolymères à base de chlorure de vinyle.**

(30) Priorité : 20.01.87 FR 8700586

(43) Date de publication de la demande :
10.08.88 Bulletin 88/32

(45) Mention de la délivrance du brevet :
07.08.91 Bulletin 91/32

(84) Etats contractants désignés :
BE CH DE ES FR GB GR IT LI NL SE

(56) Documents cités :
EP-A- 0 081 407
DE-C- 1 520 594
FR-A- 2 218 350

(73) Titulaire : ATOCHEM
4 & 8, Cours Michelet La Défense 10
F-92800 Puteaux (FR)

(72) Inventeur : Chatelain, Jean
27 Rue Chanez
F-75016 Paris (FR)
Inventeur : Legrand, Yves
28 Boulevard de l'Agriculture
F-69800 Saint-Priest (FR)

(74) Mandataire : Rochet, Michel et al
ATOCHEM Département Propriété Industrielle
F-92091 Paris la Défense Cédex 42 (FR)

# EP 0 277 856 B1

## Description

La présente invention a pour objet un procédé de préparation en masse de polymères et de copolymères à base de chlorure de vinyle par polymérisation d'une composition monomère à base de chlorure de vinyle.

La polymérisation en masse d'une composition monomère à base de chlorure de vinyle progresse d'abord dans la composition monomère liquide. En raison de l'insolubilité du polymère ou du copolymère dans la composition monomère le produit de la réaction se sépare à l'état solide au cours de la polymérisation, sous forme de particules que l'on maintient en suspension dans la composition monomère liquide en soumettant le milieu réactionnel à agitation. Lorsque la teneur pondérale du milieu réactionnel en polymère ou copolymère atteint une valeur de l'ordre de 15%, sa consistance devient comparable à celle du lait caillé soumis à agitation. Cette consistance croît jusqu'à ce que la composition monomère ne forme plus une phase liquide continue, ce qui se produit dès que la teneur pondérale du milieu réactionnel en polymère ou copolymère atteint une valeur de l'ordre de 25%, valeur au-delà de laquelle le milieu réactionnel est dans un état pulvérulent. Le milieu réactionnel est maintenu dans cet état grâce à la poursuite de l'agitation qui empêche la prise en bloc du produit de la réaction, jusqu'à obtention, en fin de polymérisation, après dégazage de la composition monomère qui n'a pas réagi, du polymère ou du copolymère à l'état pulvérulent.

Par l'expression "composition monomère à base de chlorure de vinyle" ou, plus brièvement, "composition monomère" on désigne dans la présente description le chlorure de vinyle seul ou en mélange avec au moins un autre monomère copolymérisable avec le chlorure de vinyle. Ladite composition monomère à base de chlorure de vinyle contient au moins 70% en poids de chlorure de vinyle. Comme monomères copolymérisables avec le chlorure de vinyle on peut citer notamment l'acétate de vinyle et les oléfines de bas poids moléculaire telles que, par exemple, l'éthylène et le propylène.

La polymérisation en masse d'une composition monomère à base de chlorure de vinyle est généralement réalisée en présence d'au moins un initiateur de polymérisation organosoluble générateur de radicaux libres tel que, par exemple, un peroxyde, organique ou un composé azoïque.

Lorsque le taux de conversion visé de la composition monomère est atteint, on fait subir au polymérisat obtenu un traitement de dégazage, réalisé sous agitation, destiné à séparer, des polymères ou des copolymères, la composition monomère qui n'a pas réagi.

Le polymère ou copolymère pulvérulent, obtenu après dégazage de la composition monomère qui n'a pas réagi, est amené à la pression atmosphérique au moyen généralement d'un gaz inerte, tel que l'azote, ou de vapeur d'eau avant sa mise à l'air libre, qui est suivie généralement d'une opération de tamisage.

L'opération de tamisage, qui est réalisée industriellement en continu, a pour but de séparer le produit noble, défini comme passant à travers un tamis d'ouverture de mailles donnée, choisie en fonction de la répartition granulométrique du polymère ou du copolymère et de l'utilisation à laquelle il est destiné, et le produit grossier composé essentiellement d'agglomérats de particules de résine, de valeur commerciale inférieure, défini comme refusé audit tamis.

On a déjà proposé de réaliser la préparation de polymères et de copolymères à base de chlorure de vinyle par polymérisation ou copolymérisation en masse en deux phases, par un procédé consistant à réaliser les opérations de polymérisation ou de copolymérisation en assurant une vitesse d'agitation du milieu réactionnel élevée au cours d'une première phase, et ce jusqu'à ce que l'on obtienne un taux de conversion de la composition monomère de l'ordre de 7 à 15% et de préférence de l'ordre de 8 à 12% puis à réduire la vitesse d'agitation au cours de la deuxième phase de la réaction à une valeur aussi faible que possible restant cependant suffisante pour assurer de bons échanges thermiques au sein du milieu réactionnel et ce jusqu'en fin de ladite réaction. Selon ces techniques les deux phases, effectuées la première sous agitation de turbulence élevée, la seconde sous agitation lente, sont réalisées soit dans un seul réacteur soit dans des réacteurs différents, les phases dites alors pour la première de prépolymérisation et pour la seconde de polymérisation finale ayant lieu dans des appareillages appropriés dits prépolymériseurs et polymériseurs. Selon ces techniques également la seconde phase est réalisée sur un milieu réactionnel constitué soit uniquement par la composition monomère/polymère issue de la première phase de polymérisation, soit par ladite composition monomère/polymère, par une composition monomère complémentaire à base de chlorure de vinyle, identique à ou différente de celle mise en oeuvre au cours de la première phase et par un ou plusieurs initiateurs de polymérisation.

Ces procédés et leurs variantes de réalisation ont été décrits de façon détaillée dans les brevets français et certificats d'addition n° 1.357.736, 83.377, 83.383, 83.714 ; n° 1.382.072, 84.958, 84.965, 84.966, 85.672, 89.025 ; n° 1.436.744, 87.620, 87.623, 87.625, 87.626 ; n° 1.450.464 ; n° 1.574.734 et n° 1.605.157. Des perfectionnements aux polymériseurs utilisés pour la mise en oeuvre desdits procédés ont été décrits dans les brevets français n° 73.05537, publié sous le n° 2.218.350, et n° 75.32124, publié sous le n° 2.328.722 ; et dans la demande de brevet français n° 85.05429, publiée sous le n° 2.580.192.

Ces procédés et leurs variantes de réalisation permettent d'obtenir de façon reproductible des polymères

2

et des copolymères à base de chlorure de vinyle présentant après tamisage des caractéristiques intéressantes de masse volumique apparente élevée, de diamètre moyen des particules réglable à la demande et de faible taux pondéral de fines particules.

Cependant la préparation des polymères et des copolymères à base de chlorure de vinyle selon ces procédés nécessite l'emploi de deux agitateurs de type différent, l'un pour réaliser une agitation de turbulence élevée au cours de la première phase, l'autre une agitation lente au cours de la deuxième phase.

Le procédé objet de l'invention, tout en permettant d'obtenir de façon reproductible des polymères et des copolymères à base de chlorure de vinyle présentant les caractéristiques intéressantes énoncées ci-dessus, ne nécessite l'emploi que d'un seul et même agitateur du début à la fin de la réaction de polymérisation.

Selon le procédé de l'invention on effectue au moins une partie de la réaction de polymérisation dans une zone de polymérisation délimitée par une paroi sensiblement sphérique, en réalisant, dans ladite zone de polymérisation, une circulation contrôlée et réglée du milieu réactionnel au moyen d'un ensemble-turbine à pales, entraîné en rotation, lesdites pales passant au voisinage de ladite paroi sur 10 à 60% de sa surface, le milieu réactionnel étant entraîné par la force centrifuge sur au moins une partie de la paroi sphérique dans un mouvement au moins partiellement ascendant et retombant, essentiellement sous l'action de la pesanteur, dans la partie centrale de la zone sphérique, en assurant ainsi un brassage intense et sans zone morte.

A titre préférentiel on réalise la totalité de la réaction de polymérisation dans la zone de polymérisation délimitée par une paroi sensiblement sphérique.

La demanderesse a en effet trouvé qu'en effectuant la réaction de polymérisation dans les conditions du procédé de l'invention il est possible, au moyen d'un seul agitateur, d'obtenir de façon reproductible des polymères et des copolymères à base de chlorure de vinyle présentant après tamisage des caractéristiques intéressantes de masse volumique apparente élevée, de diamètre moyen des particules réglable à la demande et de faible taux pondéral de fines particules, en dépit du fait que, du début à la fin de la réaction de polymérisation, le milieu réactionnel se présente successivement sous quatre états différents : état liquide, suspension de particules solides dans un liquide, état pâteux, état pulvérulent, et possède une consistance qui évolue considérablement.

Selon l'invention on peut faire varier la vitesse de rotation de l'ensemble-turbine à pales en fonction de l'état du milieu réactionnel et de sa consistance, du diamètre moyen des particules du polymère ou du copolymère que l'on désire obtenir ou de tout autre paramètre relatif au procédé ou à la qualité des résines à préparer. Entre le début et la fin de la réaction de polymérisation la vitesse de rotation de l'ensemble-turbine à pales est généralement réduite à une valeur inférieure au tiers et pouvant descendre à moins du quart de sa valeur initiale.

Selon l'invention on peut commencer la réaction de polymérisation dans la zone de polymérisation délimitée par une paroi sensiblement sphérique avec un milieu réactionnel initial d'importance très réduite, ce qui permet d'envisager des opérations de polymérisation dans lesquelles l'introduction, dans ladite zone de polymérisation, d'une partie du ou des monomères et/ou d'une partie du ou des initiateurs de polymérisation et/ou d'au moins une partie de tout autre additif peut être effectuée au cours de la polymérisation ou du dégazage du polymérisat obtenu.

Selon une première variante du procédé de l'invention on réalise la réaction de polymérisation en deux étapes, effectuées dans des appareillages distincts, en réalisant en une première étape une opération de prépolymérisation sur une composition monomère à base de chlorure de vinyle et en une deuxième étape une opération finale de polymérisation, la première étape étant réalisée dans la zone de polymérisation délimitée par une paroi sensiblement sphérique.

Selon un mode de réalisation de la première variante du procédé de l'invention on réalise l'opération de prépolymérisation dans la zone de polymérisation délimitée par une paroi sensiblement sphérique jusqu'à ce que l'on obtienne un taux de conversion de la composition monomère de 3 à 15%, on ajoute éventuellement au milieu réactionnel une composition monomère complémentaire à base de chlorure de vinyle identique à ou différente de celle mise en oeuvre au cours de la première étape puis réalise, sur le milieu réactionnel ainsi formé, l'opération finale de polymérisation sous agitation lente. Selon ce mode de réalisation l'étape de polymérisation finale peut être réalisée notamment dans un polymériseur de type classique tel que décrit, par exemple, dans le brevet français n° 1.382.072 et ses certificats d'addition référencés ci-avant ; dans les brevets français n° 73.05537, publié sous le n° 2.218.350 et n° 75.32124, publié sous le n° 2.328.722 ; et dans la demande de brevet français n° 85.05429, publiée sous le n° 2.580.192.

Selon une deuxième variante du procédé de l'invention on réalise la réaction de polymérisation en deux étapes, effectuées dans des appareillages distincts, en réalisant en une première étape une opération de prépolymérisation sur une composition monomère à base de chlorure de vinyle et en une deuxième étape une opération finale de polymérisation, la deuxième étape étant réalisée dans la zone de polymérisation délimitée par une paroi sensiblement sphérique.

EP 0 277 856 B1

Selon un mode de réalisation de la deuxième variante du procédé de l'invention on réalise l'opération de prépolymérisation sous agitation de turbulence élevée, jusqu'à ce que l'on obtienne un taux de conversion de la composition monomère de 3 à 15%, on ajoute éventuellement au milieu réactionnel une composition monomère complémentaire à base de chlorure de vinyle identique à ou différente de celle mise en oeuvre au cours de la première étape puis réalise, sur le milieu réactionnel ainsi formé, l'opération finale de polymérisation dans la zone de polymérisation délimitée par une paroi sensiblement sphérique. Selon ce mode de réalisation l'étape de prépolymérisation peut être réalisée notamment dans un prépolymériseur de type classique tel que décrit, par exemple, dans le brevet français n° 1.382.072.

La demanderesse a également trouvé que lorsqu'on met en oeuvre le procédé de l'invention soit en réalisant la totalité de la réaction de polymérisation dans la zone de polymérisation délimitée par une paroi sensiblement sphérique soit en réalisant la réaction de polymérisation en deux étapes, effectuées dans des appareillages distincts, la deuxième étape étant réalisée dans la zone de polymérisation délimitée par une paroi sensiblement shérique, la durée de dégazage, toutes choses égales par ailleurs, est notablement réduite.

Dans la pratique la distance entre les pales et la paroi de la zone sphérique de polymérisation du réacteur dans lequel est mis en oeuvre le procédé de l'invention est avantageusement de 2 à 50 mm. La longueur des pales de l'ensemble-turbine est telle que la distance, mesurée verticalement, de leurs extrémités au point le plus bas de la paroi sphérique est au moins égale au dixième du diamètre de la sphère, auquel cas le diamètre du cercle décrit par leurs extrémités, lors de la rotation, est au moins égal, au jeu près, aux trois cinquièmes du diamètre de la sphère, ce qui correspond au passage desdites pales au voisinage de la paroi sphérique sur au moins 10% de sa surface. Les pales peuvent passer au voisinage de la paroi sphérique de façon telle qu'elles atteignent un plan équatorial, auquel cas le diamètre du cercle décrit par leurs extrémités, lors de la rotation, est égal, au jeu près, au diamètre de la sphère. Les pales peuvent mêmes s'étendre légèrement au-delà du plan équatorial normal à l'axe de rotation. L'ensemble-turbine comporte généralement de une à six pales, et en particulier trois pales, disposées de préférence de manière régulière autour de l'axe de rotation et avantageusement profilées de manière à favoriser un brassage intense.

Complémentairement, mais sans que cela soit nécessaire, le réacteur peut être muni, dans la partie de la zone sphérique de polymérisation non occupée par l'ensemble-turbine, d'un système-racloir additionnel composé d'un ou plusieurs organes entraînés en rotation.

La forme des réacteurs industriels utilisables selon le procédé de l'invention n'est pas forcément celle d'une sphère intégrale complète. Selon l'invention il importe seulement que la zone de polymérisation soit délimitée par une paroi sensiblement sphérique. Mais, par ailleurs, diverses tubulures, raccords ou ouvertures, peuvent interrompre ou modifier la forme sphérique du réacteur. Ainsi, pour la commodité de l'utilisation et notamment du nettoyage, le réacteur peut comprendre des ouvertures de taille suffisante pour permettre l'accès à l'intérieur et, par exemple, laisser entrer un homme dans le cas de gros réacteurs. Le réacteur peut être notamment du type décrit dans le brevet français n° 81.22425, publié sous le n° 2.517.313.

On donne ci-après, à titre illustratif et non limitatif, en référence aux figures 1a à 1d de la planche 1 de dessin ci-jointe, des descriptions illustrant des modes de mise en oeuvre du procédé de l'invention et, en référence aux figures 2 et 3 des planches 2 et 3 de dessin ci-jointes, une description d'un réacteur utilisable pour la mise en oeuvre du procédé de l'invention.

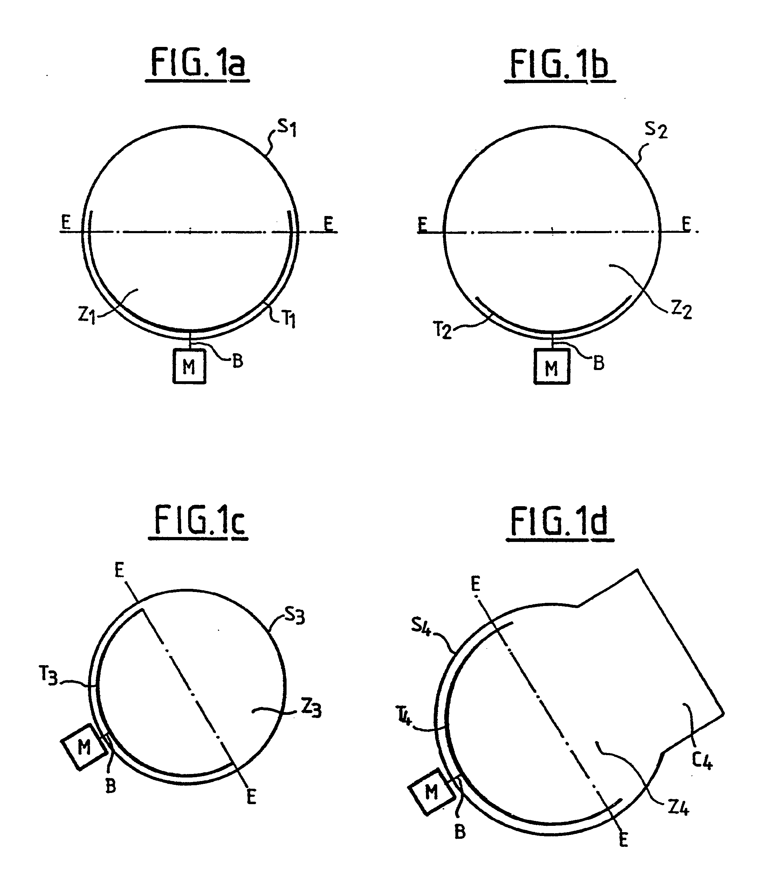

Les figures 1a à 1d sont des schémas illustrant des exemples de zones de polymérisation applicables à la mise en oeuvre du procédé de l'invention.

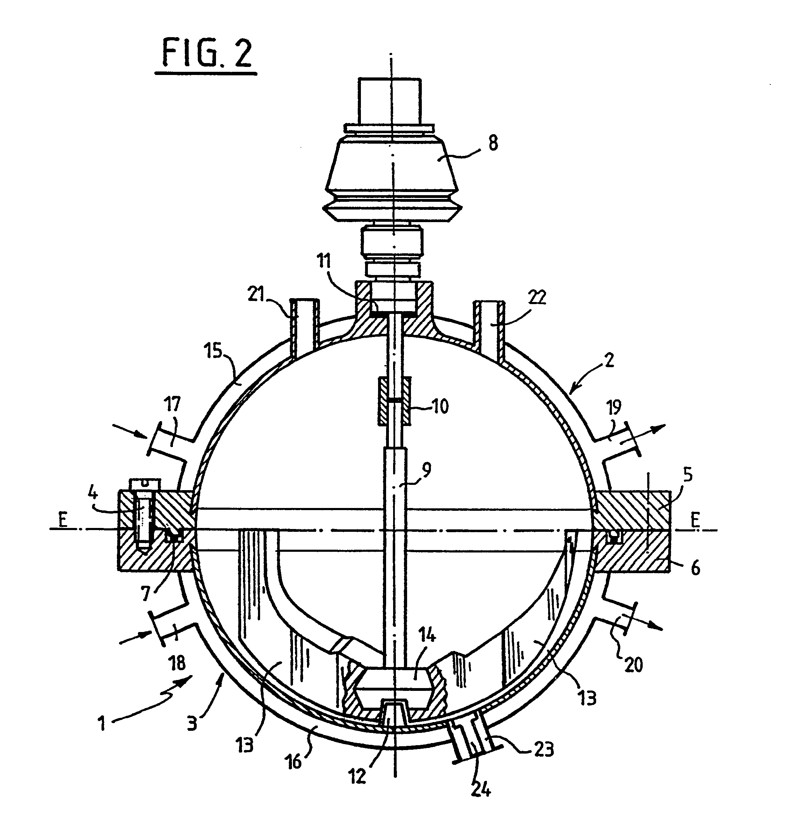

La figure 2 est une vue en coupe verticale suivant l'axe du réacteur.

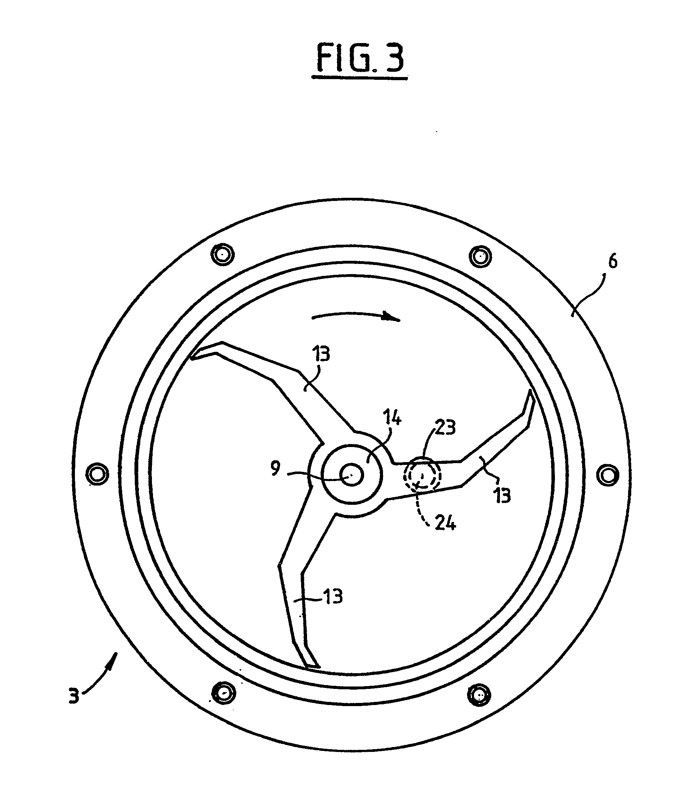

La figure 3 est une vue de dessus de la moitié inférieure du réacteur.

La figure 1a montre une zone $Z_1$ fermée de polymérisation, délimitée par une paroi sphérique $S_1$. Un ensemble-turbine $T_1$, à pales disposées de manière régulière autour d'un pivot B situé sensiblement au point bas de la sphère, est monté à rotation autour dudit pivot. Un moteur M entraîne la turbine $T_1$. Dans cet exemple les extrémités des pales de l'ensemble-turbine $T_1$ dépassent le plan équatorial (ligne E-E) normal à l'axe de rotation (lequel est sensiblement vertical dans le cas de la figure 1a) et passent au voisinage de la paroi sphérique interne sur 60% de sa surface.

La figure 1b montre une zone $Z_2$ fermée de polymérisation, délimitée par une paroi sphérique $S_2$. Un ensemble-turbine $T_2$, monté à rotation autour d'un pivot B, est entraîné par un moteur M de la même manière que représenté sur la figure 1a. Dans cet exemple les extrémités des pales de l'ensemble-turbine $T_2$ décrivent un cercle dont le diamètre est au moins égal, au jeu près, aux trois cinquièmes du diamètre de la sphère $S_2$.

La figure 1c est un schéma analogue aux figures 1a et 1b montrant une zone de polymérisation $Z_3$ délimitée par une sphère $S_3$. L'ensemble-turbine $T_3$, entraîné par le moteur M, tourne autour d'un pivot B qui est décalé par rapport au point bas de la sphère. Dans cet exemple l'axe de rotation de la turbine $T_3$ n'est pas vertical. Le plan équatorial (ligne E-E) perpendiculaire à cet axe de rotation est oblique. Les extrémités des pales de la turbine $T_3$ décrivent un cercle dont le diamètre est égal, au jeu près, à celui de la sphère $S_3$.

4

La figure 1d illustre une zone de polymérisation $Z_4$ essentiellement sphérique délimitée par une paroi sphérique $S_4$ et par un prolongement cylindrique $C_4$ pouvant servir de sas ou permettant l'accès à la zone $Z_4$. Le montage de la turbine $T_4$, entraînée par le moteur M, autour d'un pivot B est le même que sur la figure 1c.

Le réacteur sphérique 1 représenté sur la figure 2 comporte deux demi-sphères, une demi-sphère supérieure 2 et une demi-sphère inférieure 3. Les demi-sphères 2 et 3 sont assemblées et maintenues par des boulons 4 répartis dans un plan diamétral sur les brides respectives 5 et 6 des demi-sphères 2 et 3. Un joint en caoutchouc synthétique 7 assure l'étanchéité entre les deux demi-sphères.

Le réacteur 1 est muni d'un groupe d'entraînement 8 à commande magnétique entraînant un arbre 9 disposé verticalement le long d'un diamètre du réacteur 1, avec interposition d'un manchon 10 d'accouplement. L'étanchéité du passage d'arbre est assurée par un joint en polytétrafluoroéthylène 11. Un ensemble-turbine porté par un téton 12 monté au point bas de la demi-sphère inférieure 3 comporte trois pales 13 raccordées à l'embase 14 solidaire de l'arbre 9. L'ensemble-turbine est monté de manière que les pales passent au voisinage de la paroi interne de la demi-sphère inférieure 3 et s'étendent jusqu'au niveau du plan équatorial (ligne E-E) du réacteur 1.

Le réacteur 1 est entouré de deux chemises 15 et 16, assujetties respectivement aux demi-sphères 2 et 3, dans lesquelles circule un fluide échangeur de chaleur entrant par les tubulures 17 et 18 et sortant par les tubulures 19 et 20.

A sa partie supérieure le réacteur 1 comporte une tubulure 21 pour le chargement des monomères, des initiateurs de polymérisation et de tout autre additif mis en oeuvre et une tubulure 22 pour l'évacuation de la composition momomère n'ayant pas réagi. A sa partie inférieure le réacteur 1 comporte une tubulure 23 commandée par une vanne 24 pour l'évacuation du polymère.

On peut utiliser selon le procédé de l'invention tous les initiateurs de polymérisation susceptibles d'être mis en oeuvre pour la préparation en masse des polymères et copolymères à base de chlorure de vinyle et généralement des générateurs de radicaux libres tels que des peroxydes organiques comme le peroxyde de lauroyle, le peroxyde d'acétylcyclohexanesulfonyle, le peroxyde d'isobutyroyle, le peroxyde de dichloracétyle, le peroxyde de trichloracétyle ; des peroxydicarbonates comme le peroxydicarbonate d'éthyle, le peroxydicarbonate d'éthylhexyle, le peroxydicarbonate d'isopropyle, le peroxydicarbonate d'isobutyle, le peroxydicarbonate de cétyle, le peroxydicarbonate de cyclohexyle, le peroxydicarbonate de tertiobutylcyclohexyle ; le pernéodécanoate de tertiobutyle, le pernéodécanoate de cumyle ; le perméthoxyacétate de tertiobutyle ; le peréthoxyacétate de tertiobutyle ; le perphénoxy-2-propionate de tertiobutyle ; le perphénoxy-2-acétate de 2, 4, 4 triméthylpentyle ; des composés azoïques tels que le 2,2'-azo-bis (2,4 diméthylvaléronitrile). On utilise généralement 0,001 à 0,006%, en poids par rapport à la totalité de la composition monomère mise en oeuvre, de l'initiateur ou des initiateurs de polymérisation exprimés en oxygène actif.

La température de polymérisation est généralement comprise entre 10 et 100°C et de préférence entre 30 et 75°C.

On donne ci-après, à titre indicatif et non limitatif, des exemples destinés à illustrer l'invention.

Les exemples 1 à 4, 7 à 9, 11 à 15, 17, 18, 20, 21 et 23 à 26 sont selon l'invention.

Les exemples 5, 6, 10, 16, 19, et 22 sont donnés à titre comparatif.

Le produit noble est défini comme passant au tamis d'ouverture de mailles de 630 μm.

L'indice de viscosité des polymères et des copolymères à base de chlorure de vinyle est déterminé selon la norme internationale ISO 174.

Les fines particules sont représentées par le produit passant au tamis d'ouverture de mailles de 40 μm et le taux pondéral de fines particules est exprimé par rapport au produit noble.

Le copolymère d'acétate de vinyle et d'acide crotonique mis en oeuvre dans les exemples est composé de 94% en poids d'acétate de vinyle et de 6% en poids d'acide crotonique et de viscosité limite 0,187, déterminée selon la méthode décrite dans le brevet français n° 77.27429 publié sous le n° 2.402.669.

## EXEMPLE 1

Dans un réacteur sphérique tel que décrit ci-dessus et représenté sur les figures 2 et 3, de 2,5 litres de capacité, en acier inoxydable, muni d'une double enveloppe, dont la distance entre les pales de l'agitateur et la paroi de la zone sphérique de polymérisation est de 2 à 5 mm, on introduit, après mise sous vide, 860 g de chlorure de vinyle et purge l'appareil par dégazage de 50 g de chlorure de vinyle. On introduit également 0,519 g de peroxydicarbonate d'éthylhexyle correspondant à 0,024 g d'oxygène actif et 0,080 g de copolymère d'acétate de vinyle et d'acide crotonique. La vitesse d'agitation est réglée à 500 tr/min.

La température du milieu réactionnel est portée en 30 minutes à 69°C, ce qui correspond à une pression relative de 11,5 bars.

Après 15 minutes de polymérisation à 69°C la température du milieu réactionnel est abaissée en 10 minu-

5

tes à 60°C, ce qui correspond à une pression relative de 10 bars, et la vitesse d'agitation réduite à 150 tr/min.

Après 3 heures de polymérisation à 60°C et dégazage du chlorure de vinyle qui n'a pas réagi on recueille 520 g de chlorure de polyvinyle.

EXEMPLE 2

Dans le réacteur sphérique utilisé dans l'exemple 1 on introduit, après mise sous vide, 860 g de chlorure de vinyle et purge l'appareil par dégazage de 50 g de chlorure de vinyle. On introduit également 0,216 g de peroxydicarbonate d'éthylhexyle correspondant à 0,010 g d'oxygène actif, 0,373 g de peroxyde de lauroyle correspondant à 0,015 g d'oxygène actif et 0,020 g de copolymère d'acétate de vinyle et d'acide crotonique. La vitesse d'agitation est réglée à 350 tr/min.

La température du milieu réactionnel est portée en 30 minutes à 69°C, ce qui correspond à une pression relative de 11,5 bars.

Après 15 minutes de polymérisation à 69°C la vitesse d'agitation est réduite à 150 tr/min.

Après 2,25 heures de polymérisation à 69°C et dégazage du chlorure de vinyle qui n'a pas réagi on recueille 440 g de chlorure de polyvinyle.

EXEMPLE 3

L'appareillage et les conditions de polymérisation sont les mêmes que dans l'exemple 1, à cela près que la vitesse d'agitation est maintenue à 500 tr/min pendant toute la durée de la polymérisation.

Après 3 heures de polymérisation à 60°C et dégazage du chlorure de vinyle qui n'a pas réagi on recueille 530 g de chlorure de polyvinyle.

EXEMPLE 4

L'appareillage et les conditions de polymérisation sont les mêmes que dans l'exemple 1, à cela près que la vitesse d'agitation initiale est réglée à 700 tr/min au lieu de 500 tr/min.

Après 3 heures de polymérisation à 60°C et dégazage du chlorure de vinyle qui n'a pas réagi on recueille 525 g de chlorure de polyvinyle.

EXEMPLE 5

Dans un prépolymériseur vertical cylindrique, de section horizontale circulaire, de 1,5 litre de capacité, en acier inoxydable, muni d'une double enveloppe et d'un agitateur constitué d'une turbine de type "Lightnin" à 6 pales plates de 70 mm de diamètre, on introduit, après mise sous vide, 900 g de chlorure de vinyle et purge l'appareil par dégazage de 50 g de chlorure de vinyle. On introduit également 0,216 g de peroxydicarbonate d'éthylhexyle correspondant à 0,010 g d'oxygène actif et 0,1 g de copolymère d'acétate de vinyle et d'acide crotonique. La vitesse d'agitation est réglée à 1200 tr/min.

La température du milieu réactionnel est portée en 30 minutes à 69°C, ce qui correspond à une pression relative de 11,5 bars.

Après 15 minutes de prépolymérisation à 69°C, le taux de conversion étant voisin de 10%, le prépolymérisat est transféré dans un polymériseur vertical de 2,5 litres de capacité, en acier inoxydable, muni d'une double enveloppe, préalablement purgé par dégazage de 50 g de chlorure de vinyle et contenant 150 g de chlorure de vinyle et 0,432 g de peroxydicarbonate d'éthylhexyle correspondant à 0,020 g d'oxygène actif. Le polymériseur est muni d'un agitateur constitué par un ruban enroulé en spires hélicoïdales, passant au voisinage des parois de l'autoclave et fixé au moyen de trois supports sur un arbre rotatif traversant la partie supérieure du polymériseur selon son axe et solidaire, à son extrémité inférieure, d'un bras épousant la forme du fond bombé du polymériseur. La vitesse d'agitation est réglée à 120 tr/min.

La température du milieu réactionnel est portée en 20 minutes à 60°C, ce qui correspond à une pression relative de 10 bars dans le polymériseur.

Après 3 heures de polymérisation à 60°C et dégazage du chlorure de vinyle qui n'a pas réagi on recueille 650 g de chlorure de polyvinyle.

EXEMPLE 6

L'appareillage est le même que dans l'exemple 5.

Les conditions de prépolymérisation sont les mêmes que dans l'exemple 5, à cela près que la vitesse d'agitation est réglée à 850 tr/min et que la quantité de copolymère d'acétate de vinyle et d'acide crotonique mis en oeuvre est de 0,02 g.

Après 15 minutes de prépolymérisation à 69°C, le taux de conversion étant voisin de 10%, le prépolymérisat est transféré dans le polymériseur préalablement purgé par dégazage de 50 g de chlorure de vinyle et contenant 150 g de chlorure de vinyle, 0,216 g de peroxydicarbonate d'éthylhexyle correspondant à 0,010 g d'oxygène actif et 0,249 g de peroxyde de lauroyle correspondant à 0,010 g d'oxygène actif. La vitesse d'agitation est réglée à 120 tr/min.

La température du milieu réactionnel est portée en 30 minutes à 69°C, ce qui correspond à une pression relative de 11,5 bars.

Après 2,25 heures de polymérisation à 69°C et dégazage du chlorure de vinyle qui n'a pas réagi on recueille 510 g de chlorure de polyvinyle.

## EXEMPLE 7

Dans le réacteur sphérique utilisé dans l'exemple 1, employé en tant que prépolymériseur, on introduit, après mise sous vide, 900 g de chlorure de vinyle et purge l'appareil par dégazage de 50 g de chlorure de vinyle. On introduit également 0,238 g de peroxydicarbonate d'éthylhexyle correspondant à 0,011 g d'oxygène actif et 0,1 g de copolymère d'acétate de vinyle et d'acide crotonique. La vitesse d'agitation est réglée à 500 tr/min.

La température du milieu réactionnel est portée en 30 minutes à 69°C, ce qui correspond à une pression relative de 11,5 bars.

Après 15 minutes de prépolymérisation à 69°C, le taux de conversion étant voisin de 10%, le prépolymérisat est transféré dans le polymériseur vertical utilisé dans l'exemple 5, préalablement purgé par dégazage de 50 g de chlorure de vinyle et contenant 150 g de chlorure de vinyle et 0,432 g de peroxydicarbonate d'éthylhexyle correspondant à 0,020 g d'oxygène actif. La vitesse d'agitation est réglée à 120 tr/min.

La température du milieu réactionnel est portée en 20 minutes à 60°C, ce qui correspond à une pression de 10 bars dans le polymériseur.

Après 3 heures de polymérisation à 60°C et dégazage du chlorure de vinyle qui n'a pas réagi on recueille 630 g de chlorure de polyvinyle.

## EXEMPLE 8

Dans le prépolymériseur utilisé dans l'exemple 5 on met en oeuvre les mêmes conditions de prépolymérisation que dans l'exemple 5.

Après 15 minutes de prépolymérisation à 69°C, le taux de conversion étant voisin de 10%, le prépolymérisat est transféré dans le réacteur sphérique utilisé dans l'exemple 1, employé en tant que polymériseur, préalablement purgé par dégazage de 50 g de chlorure de vinyle et contenant 150 g de chlorure de vinyle et 0,432 g de peroxydicarbonate d'éthylhexyle correspondant à 0,020 g d'oxygène actif. La vitesse d'agitation est réglée à 150 tr/min.

La température du milieu réactionnel est portée en 20 minutes à 60°C, ce qui correspond à une pression relative de 10 bars.

Après 3 heures de polymérisation à 60°C et dégazage du chlorure de vinyle qui n'a pas réagi on recueille 660 g de chlorure de polyvinyle.

## EXEMPLE 9

Dans le réacteur sphérique utilisé dans l'exemple 1 on introduit, après mise sous vide, 860 g de chlorure de vinyle et purge l'appareil par dégazage de 50 g de chlorure de vinyle. On introduit également 15 g d'acétate de vinyle, 0,216 g de peroxydicarbonate d'éthylhexyle correspondant à 0,010 g d'oxygène actif, 0,373 g de peroxyde de lauroyle correspondant à 0,015 g d'oxygène actif et 0,015 g de copolymère d'acétate de vinyle et d'acide crotonique. La vitesse d'agitation est réglée à 350 tr/min.

La température du milieu réactionnel est portée en 30 minutes à 69°C, ce qui correspond à une pression relative de 11,5 bars.

Après 15 minutes de polymérisation à 69°C la vitesse d'agitation est réduite à 150 tr/min.

Après 2,5 heures de polymérisation à 69°C et dégazage des monomères qui n'ont pas réagi on recueille 415 g d'un copolymère de chlorure de vinyle et d'acétate de vinyle composé de 99% en poids de chlorure de vinyle et de 1% en poids d'acétate de vinyle.

## EXEMPLE 10

L'appareillage est le même que dans l'exemple 6.

Les conditions de prépolymérisation et de polymérisation sont les mêmes que dans l'exemple 6, à cela près que l'on introduit également 5 g d'acétate de vinyle dans le prépolymériseur et 12 g d'acétate de vinyle dans le polymériseur.

Après 2,5 heures de polymérisation à 69°C et dégazage des monomères qui n'ont pas réagi on recueille 425 g d'un copolymère de chlorure de vinyle et d'acétate de vinyle composé de 99% en poids de chlorure de vinyle et de 1% en poids d'acétate de vinyle.

## EXEMPLE 11

Dans un prépolymériseur vertical cylindrique, de section horizontale circulaire, de 70 litres de capacité, en acier inoxydable, muni d'une double enveloppe et d'un agitateur constitué d'une turbine de type "Lightnin" à 6 pales plates de 250 mm de diamètre on introduit, après mise sous vide, 44 kg de chlorure de vinyle et purge l'appareil par dégazage de 2 kg de chlorure de vinyle. On introduit également 10,88 g de peroxydicarbonate d'éthylhexyle correspondant à 0,504 g d'oxygène actif. La vitesse d'agitation est réglée à 370 tr/min.

La température du milieu réactionnel est portée en 30 minutes à 69°C, ce qui correspond à une pression relative de 11,5 bars.

Après 15 minutes de prépolymérisation à 69°C, le taux de conversion étant voisin de 10%, le prépolymérisat est transféré dans un réacteur sphérique tel que décrit ci-dessus et représenté sur les figures 2 et 3, de 125 litres de capacité, en acier inoxydable, muni d'une double enveloppe, dont la distance entre les pales de l'agitateur et la paroi de la zone sphérique de polymérisation est de 2 à 15 mm, préalablement purgé par dégazage de 2 kg de chlorure de vinyle et contenant 28 kg de chlorure de vinyle, 14,4 g de peroxydicarbonate d'éthylhexyle correspondant à 0,665 g d'oxygène actif, 12,63 g de peroxyde d'acétylcyclohexanesulfonyle correspondant à 0,910 g d'oxygène actif et 10,5 g de copolymère d'acétate de vinyle et d'acide crotonique. La vitesse d'agitation est réglée à 75 tr/min.

La température du milieu réactionnel est portée en 20 minutes à 54°C, ce qui correspond à une pression relative de 7,8 bars dans le polymériseur.

Après 3,5 heures de polymérisation à 54°C et dégazage, à température de 80°C, pendant 2 heures, du chlorure de vinyl qui n'a pas réagi on recueille 53,2 kg de chlorure de polyvinyle dont le taux de chlorure de vinyle monomère résiduel est de 1 mg/kg.

## EXEMPLE 12

Dans le prépolymériseur utilisé dans l'exemple 11 on met en oeuvre les mêmes conditions de prépolymérisation que dans l'exemple 11.

Après 15 minutes de prépolymérisation à 69°C, le taux de conversion étant voisin de 10%, le prépolymérisat est transféré dans le réacteur sphérique utilisé dans l'exemple 11, employé en tant que polymériseur, préalablement purgé par dégazage de 2 kg de chlorure de vinyle et contenant 28 kg de chlorure de vinyle, 14,4 de peroxydicarbonate d'éthylhexyle correspondant à 0,665 g d'oxygène actif, 12,63 g de peroxyde d'acétylcyclohexanesulfonyle correspondant à 0,910 g d'oxygène actif et 10,5 g de copolymère d'acétate de vinyle et d'acide crotonique. La vitesse d'agitation est réglée à 75 tr/min.

La température du milieu réactionnel est portée en 20 minutes à 52°C, ce qui correspond à une pression relative de 7,5 bars.

Après 1,25 heure de polymérisation à 52°C la vitesse d'agitation est réduite à 30 tr/min et la température du milieu réactionnel portée en 10 minutes à 55°C, ce qui correspond à une pression relative de 8 bars.

Après 1,25 heure de polymérisation à 55°C et dégazage du chlorure de vinyle qui n'a pas réagi on recueille 53,8 kg de chlorure de polyvinyle.

## EXEMPLE 13

Dans le prépolymériseur utilisé dans l'exemple 11 on met en oeuvre les mêmes conditions de prépolymérisation que dans l'exemple 11.

Après 15 minutes de prépolymérisation à 69°C, le taux de conversion étant voisin de 10%, le prépolymérisat est transféré dans le réacteur sphérique utilisé dans l'exemple 11, employé en tant que polymériseur, préalablement purgé par dégazage de 2 kg de chlorure de vinyle et contenant 36 kg de chlorure de vinyle, 16 g de peroxydicarbonate d'éthylhexyle correspondant à 0,740 g d'oxygène actif, 14,08 g de peroxyde d'acétylcyclo-

EP 0 277 856 B1

hexanesulfonyle correspondant à 1,015 g d'oxygène actif et 11,7 g de copolymère d'acétate de vinyle et d'acide crotonique. La vitesse d'agitation est réglée à 75 tr/min.

La température du milieu réactionnel est portée en 20 minutes à 52°C, ce qui correspond à une pression relative de 7,5 bars.

Après 1,25 heure de polymérisation à 52°C la vitesse d'agitation est réduite à 30 tr/min et la température du milieu réactionnel portée en 10 minutes à 55°C, ce qui correspond à une pression relative de 8 bars.

Après 1,25 heure de polymérisation à 55°C et dégazage du chlorure de vinyle qui n'a pas réagi on recueille 57,7 kg de chlorure de polyvinyle.

## EXEMPLE 14

Dans le prépolymériseur utilisé dans l'exemple 11 on met en oeuvre les mêmes conditions de prépolymérisation que dans l'exemple 11.

Après 15 minutes de prépolymérisation à 69°C, le taux de conversion étant voisin de 10%, le prépolymérisat est transféré dans le réacteur sphérique utilisé dans l'exemple 11, employé en tant que polymériseur, préalablement purgé par dégazage de 2 kg de chlorure de vinyle et contenant 12 kg de chlorure de vinyle, 11,1 g de peroxydicarbonate d'éthylhexyle correspondant à 0,513 g d'oxygène actif, 9,74 g de peroxyde d'acétylcyclohexanesulfonyle correspondant à 0,702 g d'oxygène actif et 8,1 g de copolymère d'acétate de vinyle et d'acide crotonique. La vitesse d'agitation est réglée à 75 tr/min.

La température du milieu réactionnel est portée en 20 minutes à 52°C, ce qui correspond à une pression relative de 7,5 bars.

Après 1,25 heure de polymérisation à 52°C la vitesse d'agitation est réduite à 30 tr/min et la température du milieu réactionnel portée en 10 minutes à 55°C, ce qui correspond à une pression relative de 8 bars.

Après 1,25 heure de polymérisation à 55°C et dégazage du chlorure de vinyle qui n'a pas réagi on recueille 41,5 kg de chlorure de polyvinyle.

## EXEMPLE 15

Dans le prépolymériseur utilisé dans l'exemple 11 on met en oeuvre les mêmes conditions de prépolymérisation que dans l'exemple 11.

Après 15 minutes de prépolymérisation à 69°C, le taux de conversion étant voisin de 10%, le prépolymérisat est transféré dans le réacteur sphérique utilisé dans l'exemple 11, employé en tant que polymériseur, préalablement purgé par dégazage de 2 kg de chlorure de vinyle et contenant 28 kg de chlorure de vinyle, 11,4 g de peroxydicarbonate d'éthylhexyle correspondant à 0,665 g d'oxygène actif, 12,63 g de peroxyde d'acétylcyclohexanesulfonyle correspondant à 0,910 g d'oxygène actif et 10,5 g de copolymère d'acétate de vinyle et d'acide crotonique. La vitesse d'agitation est réglée à 100 tr/min.

La température du milieu réactionnel est portée en 20 minutes à 54°C, ce qui correspond à une pression relative de 7,8 bars, puis la vitesse d'agitation est réduite en deux heures, de manière régulière, à 30 tr/min.

Après 3,5 heure de polymérisation à 54°C et dégazage du chlorure de vinyle qui n'a pas réagi on recueille 54,3 kg de chlorure de polyvinyle.

## EXEMPLE 16

Dans un prépolymériseur vertical cylindrique, de section horizontale circulaire, de 200 litres de capacité, en acier inoxydable, muni d'une double enveloppe et d'un agitateur constitué d'une turbine de type "Lightnin" à 6 pales plates de 290 mm de diamètre on introduit, après mise sous vide, 130 kg de chlorure de vinyle et purge l'appareil par dégazage de 10 kg de chlorure de vinyle. On introduit également 31,1 g de peroxydicarbonate d'éthylhexyle correspondant à 1,44 g d'oxygène actif. La vitesse d'agitation est réglée à 300 tr/min.

La température du milieu réactionnel est portée en 30 minutes à 69°C, ce qui correspond à une pression relative de 11,5 bars.

Après 15 minutes de prépolymérisation à 69°C, le taux de conversion étant voisin de 10%, le prépolymérisat est transféré dans un polymériseur vertical de 400 litres de capacité, en acier inoxydable, muni d'une double enveloppe, préalablement purgé par dégazage de 10 kg de chlorure de vinyle et contenant 95 kg de chlorure de vinyle, 44,1 g de peroxydicarbonate d'éthylhexyle correspondant à 2,039 g d'oxygène actif, 38,72 g de peroxyde d'acétylcyclohexanesulfonyle correspondant à 2,79 g d'oxygène actif et 25 g de copolymère d'acétate de vinyle et d'acide crotonique. Le polymériseur est muni de deux agitateurs à commande indépendante, l'un A constitué par un ruban enroulé en spires hélicoïdales sur un arbre rotatif traversant la partie supérieure du polymériseur selon son axe, l'autre B constitué par deux bras épousant la forme du fond bombé du polymériseur

9

et raccordés à un tourillon traversant le fond du polymériseur selon son axe. La vitesse d'agitation de l'agitateur A est réglée à 35 tr/min et celle de l'agitateur B, en sens inverse, à 25 tr/min.

La température de milieu réactionnel est portée en 20 minutes à 54°C, ce qui correspond à une pression relative de 7,8 bars dans le polymériseur.

Après 3,5 heures de polymérisation à 54°C et dégazage, à température de 80°C, pendant 2,75 heures, du chlorure de vinyle qui n'a pas réagi on recueille 160,8 kg de chlorure de polyvinyle dont le taux de chlorure de vinyle monomère résiduel est de 2 mg/kg.

## EXEMPLE 17

Dans le prépolymériseur utilisé dans l'exemple 11 on met en oeuvre les mêmes conditions de prépolymérisation que dans l'exemple 11, à cela près que la vitesse d'agitation est réglée à 485 tr/min au lieu de 370 tr/min.

Après 15 minutes de prépolymérisation à 69°C, le taux de conversion étant voisin de 10%, le prépolymérisat est transféré dans le réacteur sphérique utilisé dans l'exemple 11, employé en tant que polymériseur, préablement purgé par dégazage de 2 kg de chlorure de vinyle et contenant 28 kg de chlorure de vinyle, 17,4 g de peroxydicarbonate d'éthylhexyle correspondant à 0,805 g d'oxygène actif, 7,84 g de peroxyde de lauroyle correspondant à 0,315 g d'oxygène actif et 2,40 g de copolymère d'acétate de vinyle et d'acide crotonique. La vitesse d'agitation est réglée à 75 tr/min.

La température du milieu réactionnel est portée en 30 minutes à 57°C, ce qui correspond à une pression relative de 8,2 bars, puis portée en 1,75 heure à 71°C, ce qui correspond à une pression relative de 12 bars.

Après 1 heure de polyméristaion à 71°C la vitesse d'agitation est réduite à 30 tr/min.

Après 20 minutes de polymérisation à vitesse d'agitation de 30 tr/min et dégazage du chlorure de vinyle qui n'a pas réagi on recueille 42,7 kg de chlorure de polyvinyle.

## EXEMPLE 18

Dans le prépolymériseur utilisé dans l'exemple 11 on introduit, après mise sous vide, 52,5 kg de chlorure de vinyle et purge l'appareil par dégazage de 3 kg de chlorure de vinyle. On introduit également 13,6 g de peroxydicarbonate d'éthylhexyle correspondant à 0,629 g d'oxygène actif. La vitesse d'agitation est réglée à 485 tr/min.

La température du milieu réactionnel est portée en 30 minutes à 69°C, ce qui correspond à une pression relative de 11,5 bars.

Après 15 minutes de prépolymérisation à 69°C, le taux de conversion étant voisin de 10%, le prépolymérisat est transféré dans le réacteur sphérique utilisé dans l'exemple 11, employé en tant que polymériseur, préablement purgé par dégazage de 3 kg de chlorure de vinyle et contenant 34,5 kg de chlorure de vinyle, 20,9 g de peroxydicarbonate d'éthylhexyle correspondant à 0,966 g d'oxygène actif, 9,41 g de peroxyde de lauroyle correspondant à 0,378 g d'oxygène actif et 2,9 g de copolymère d'acétate de vinyle et d'acide crotonique. La vitesse d'agitation est réglée à 75 tr/min.

La température du milieu réactionnel est portée en 30 minutes à 57°C, ce qui correspond à une pression relative de 8,7 bars dans le polymériseur, puis portée en 1,75 heure à 71°C, ce qui correspond à une pression relative de 12 bars.

Après 1 heure de polymérisation à 71°C la vitesse d'agitation est réduite à 30 tr/min.

Après 20 minutes de polymérisation à vitesse d'agitation de 30 tr/min et dégazage du chlorure de vinyle qui n'a pas réagi on recueille 51,6 kg de chlorure de polyvinyle.

## EXEMPLE 19

Dans le prépolymériseur utilisé dans l'exemple 16 on met en oeuvre les mêmes conditions de prépolymérisation que dans l'exemple 16, à cela près que la vitesse d'agitation est réglée à 390 tr/min au lieu de 300 tr/min.

Après 15 minutes de prépolymérisation à 69°C, le taux de conversion étant voisin de 10%, le prépolymérisat est transféré dans le polymériseur vertical utilisé dans l'exemple 16, prélablement purgé par dégazage de 10 kg de chlorure de vinyle et contenant 90 kg de chlorure de vinyle, 52,16 g de peroxydicarbonate d'éthylhexyle correspondant à 2,412 g d'oxygène actif, 23,5 g de peroxyde de lauroyle correspondant à 0,945 g d'oxygène actif et 7,2 g de copolymère d'acétate de vinyle et d'acide crotonique. La vitesse d'agitation de l'agitateur A est réglée à 30 tr/min et celle de l'agitateur B, en sens inverse, à 20 tr/min.

La température du milieu réactionnel est portée en 30 minutes à 57°C, ce qui correspond à une pression relative de 8,2 bars, puis portée en 1,75 heure à 71°C, ce qui correspond à une pression relative de 12 bars.

Après 20 minutes de polymérisation à 71°C et dégazage du chlorure de vinyle qui n'a pas réagi on recueille 124 kg de chlorure de polyvinyle.

## EXEMPLE 20

Dans le prépolymériseur utilisé dans l'exemple 11 on met en oeuvre les mêmes conditions de prépolymérisation que dans l'exemple 11, à cela près que la vitesse d'agitation est réglée à 420 tr/min au lieu de 370 tr/min.

Après 15 minutes de prépolymérisation à 69°C, le taux de conversion étant voisin de 10%, le prépolymérisat est transféré dans le réacteur sphérique utilisé dans l'exemple 11, employé en tant que polymériseur, préalablement purgé par dégazage de 2 kg de chlorure de vinyle et contenant 28 kg de chlorure de vinyle, 8,32 g de peroxydicarbonate d'éthylhexyle correspondant à 0,385 g d'oxygène actif, 17 g de peroxyde d'acétylcyclohexanesulfonyle correspondant à 1,225 g d'oxygène actif et 13 g de copolymère d'acétate de vinyle et d'acide crotonique. La vitesse d'agitation est réglée à 75 tr/min.

La température du milieu réactionnel est portée en 30 minutes à 53°C, ce qui correspond à une pression relative de 7,3 bars.

Après 1,25 heure de polymérisation à 53°C la vitesse d'agitation est réduite à 30 tr/min et la température du milieu réactionnel abaissée en 45 minutes à 47°C, ce qui correspond à une pression relative de 6,2 bars.

Après 1,5 heure de polymérisation à 47°C et dégazage du chlorure de vinyle qui n'a pas réagi on recueille 45,5 kg de chlorure de polyvinyle.

## EXEMPLE 21

Dans le prépolymériseur utilisé dans l'exemple 18 on met en oeuvre les mêmes conditions de prépolymérisation que dans l'exemple 18, à cela près que la vitesse d'agitation est réglée à 420 tr/min au lieu de 485 tr/min.

Après 15 minutes de prépolymérisation à 69°C, le taux de conversion étant voisin de 10%, le prépolymérisat est transféré dans le réacteur sphérique utilisé dans l'exemple 11, employé en tant que polymériseur, préalablement purgé par dégazage de 2 kg de chlorure de vinyle et contenant 34,5 kg de chlorure de vinyle, 9,88 g de peroxydicarbonate d'éthylhexyle correspondant à 0,462 g d'oxygène actif, 20,4 g de peroxyde d'acétylcyclohexanesulfonyle correspondant à 1,47 g d'oxygène actif et 16 g de copolymère d'acétate de vinyle et d'acide crotonique. La vitesse d'agitation est réglée à 75 tr/min.

La température du milieu réactionnel est portée en 30 minutes à 53°C, ce qui correspond à une pression relative de 7,3 bars.

Après 1,25 heure de polymérisation, le taux de conversion étant voisin de 10%, la vitesse d'agitation est réduite à 50 tr/min et la température du milieu réactionnel abaissée en 45 minutes à 47°C, ce qui correspond à une pression relative de 6,2 bars.

Après 1,5 heure de polymérisation à 47°C et dégazage du chlorure de vinyle qui n'a pas réagi on recueille 51,9 kg de chlorure de polyvinyle.

## EXEMPLE 22

Dans le prépolymériseur utilisé dans l'exemple 16 on met en oeuvre les mêmes conditions de prépolymérisation que dans l'exemple 16, à cela près que la vitesse d'agitation est réglée à 350 tr/min au lieu de 300 tr/min.

Après 15 minutes de prépolymérisation à 69°C, le taux de conversion étant voisin de 10%, le prépolymérisat est transféré dans le polymériseur vertical utilisé dans l'exemple 16, préalablement purgé par dégazage de 10 kg de chlorure de vinyle et contenant 90 kg de chlorure de vinyle, 25 g de peroxydicarbonate d'éthylhexyle correspondant à 1,16 g d'oxygène actif, 51,08 g de peroxyde d'acétylcyclohexanesulfonyle correspondant à 3,68 g d'oxygène actif et 31 g de copolymère d'acétate de vinyle et d'acide crotonique. La vitesse d'agitation de l'agitateur A est réglée à 30 tr/min et celle de l'agitateur B, en sens inverse, à 20 tr/min.

La température du milieu réactionnel est portée en 30 minutes à 53°C, ce qui correspond à une pression relative de 7,3 bars.

Après 1,25 heure de polymérisation à 53°C la température du milieu réactionnel est abaissée en 45 minutes à 47°C, ce qui correspond à une pression relative de 6,2 bars.

Après 1,5 heure de polymérisation à 47°C et dégazage du chlorure de vinyle qui n'a pas réagi on recueille 127,5 kg de chlorure de polyvinyle.

EXEMPLE 23

Dans le réacteur sphérique utilisé dans l'exemple 11 on introduit, après mise sous vide, 66 kg de chlorure de vinyle et purge l'appareil par dégazage de 6 kg de chlorure de vinyle. On introduit également 15,5 g de peroxydicarbonate d'éthylhexyl correspondant à 0,717 g d'oxygène actif et 12 g de copolymère d'acétate de vinyle et d'acide crotonique. La vitesse d'agitation est réglée à 175 tr/min.

La température du milieu réactionnel est portée en 40 minutes à 69°C, ce qui correspond à une pression relative de 11,5 bars.

Après 15 minutes de polymérisation à 69°C la température du milieu réactionnel est abaissée en 10 minutes à 25°C, ce qui correspond à une pression relative de 3,5 bars. On introduit alors 15 kg de chlorure de vinyle, 11,2 g de peroxydicarbonate d'éthylhexyle correspondant à 0,518 g d'oxygène actif et 13,5 g de peroxyde d'acétylcyclohexanesulfonyle correspondant à 0,973 g d'oxygène actif. La vitesse d'agitation est réglée à 75 tr/min.

La température du milieu réactionnel est portée en 20 minutes à 57°C, ce qui correspond à une pression relative de 8,2 bars.

Après 1,25 heure de polymérisation à 57°C la vitesse d'agitation est réduite à 50 tr/min.

Après 3,5 heures de polymérisation à 57°C et dégazage du chlorure de vinyle qui n'a pas réagi on recueille 58,2 kg de chlorure de polyvinyle.

EXEMPLE 24

Dans le réacteur sphérique utilisé dans l'exemple 11 on introduit, après mise sous vide, 66 kg de chlorure de vinyle et purge l'appareil par dégazage de 6 kg de chlorure de vinyle. On introduit également 15,5 g de peroxydicarbonate d'éthylhexyle correspondant à 0,717 g d'oxygène actif et 3 g de copolymère d'acétate de vinyle et d'acide crotonique. La vitesse d'agitation est réglée à 175 tr/min.

La température du milieu réactionnel est portée en 40 minutes à 69°C, ce qui correspond à une pression relative de 11,5 bars.

Après 15 minutes de polymérisation à 69°C la température du milieu réactionnel est abaissée en 10 minutes à 25°C, ce qui correspond à une pression relative de 3,5 bars. On introduit alors 15 kg de chlorure de vinyle, 14,6 g de peroxydicarbonate d'éthylhexyle correspondant à 0,675 g d'oxygène actif et 8,4 g de peroxyde de lauroyle correspondant à 0,338 g d'oxygène actif. La vitesse d'agitation est réglée à 75 tr/min.

La température du milieu réactionnel est portée en 30 minutes à 57°C, ce qui correspond à une pression relative de 8,2 bars puis portée en 1,75 heure à 71°C, ce qui correspond à une pression relative de 12 bars.

Après 2,25 heures de polymérisation à vitesse d'agitation de 75 tr/min la vitesse d'agitation est réduite à 50 tr/min.

Après 20 minutes de polymérisation à vitesse d'agitation de 50 tr/min et dégazage du chlorure de vinyle qui n'a pas réagi on recueille 46,5 kg de chlorure de polyvinyle.

EXEMPLE 25

Dans le réacteur sphérique utilisé dans l'exemple 11 on introduit, après mise sous vide, 66 kg de chlorure de vinyle et purge l'appareil par dégazage de 6 kg de chlorure de vinyle. On introduit également 15,5 g de peroxydicarbonate d'éthylhexyle correspondant à 0,717 g d'oxygène actif et 24 g de copolymère d'acétate de vinyle et d'acide crotonique. La vitesse d'agitation est réglée à 175 tr/min.

La température du milieu réactionnel est portée en 40 minutes à 69°C, ce qui correspond à une pression relative de 11,5 bars.

Après 15 minutes de polymérisation à 69°C la température du milieu réactionnel est abaissée en 10 minutes à 25°C, ce qui correspond à une pression relative de 3,5 bars. On introduit alors 15 kg de chlorure de vinyle, 6,3 g de peroxydicarbonate d'éthylhexyle correspondant à 0,291 g d'oxygène actif et 19,7 g de peroxyde d'acétylcyclohexanesulfonyle correspondant à 1,420 g d'oxygène actif. La vitesse d'agitation est réglée à 75 tr/min.

La température du milieu réactionnel est portée en 40 minutes à 53°C, ce qui correspond à une pression relative de 7,3 bars.

Après 1,25 heure de polymérisation à 53°C la vitesse d'agitation est réduite à 50 tr/min et la température du milieu réactionnel est portée en 45 minutes à 47°C, ce qui correspond à une pression relative de 6,2 bars.

Après 1,5 heure de polymérisation à 47°C et dégazage du chlorure de vinyle qui n'a pas réagi on recueille 50,6 kg de chlorure de polyvinyle.

## EXEMPLE 26

Dans le réacteur sphérique utilisé dans l'exemple 11 on introduit, après mise sous vide, 82 kg de chlorure de vinyle et purge l'appareil par dégazage de 7 kg de chlorure de vinyle. On introduit également 19,4 g de peroxydicarbonate d'éthylhexyle correspondant à 0,897 g d'oxygène actif et 15 g de copolymère d'acétate de vinyle et d'acide crotonique. La vitesse d'agitation est réglée à 175 tr/min.

La température du milieu réactionnel est portée en 40 minutes à 69°C, ce qui correspond à une pression relative de 11,5 bars.

Après 15 minutes de polymérisation à 69°C la température du milieu réactionnel est abaissée en 10 minutes à 57°C, ce qui correspond à une pression relative de 8,2 bars. On introduit alors 11,2 g de peroxydicarbonate d'éthylhexyle correspondant à 0,518 g d'oxygène actif et 13,5 g de peroxyde d'acétylcyclohexanesulfonyle correspondant à 0,973 g d'oxygène actif. La vitesse d'agitation est réglée à 75 tr/min.

Après 1,25 heure de polymérisation à 57°C la vitesse d'agitation est réduite à 50 tr/min.

Après 3,5 heures de polymérisation à 57°C et dégazage du chlorure de vinyle qui n'a pas réagi on recueille 56 kg de chlorure de polyvinyle.

Les tableaux 1, 2 et 3 ci-après indiquent pour chaque exemple le taux pondéral de produit noble ainsi que, déterminés sur le produit noble :

— l'indice de viscosité,

— la masse volumique apparente,

— le diamètre moyen des particules,

— le taux pondéral de fines particules.

EP 0 277 856 B1

## TABLEAU 1

| | EXEMPLES SELON L'INVENTION | | | | EXEMPLES COMPARATIFS | | EXEMPLES SELON L'INVENTION | | | EXEMPLE COMPA- RATIF |
|---|---|---|---|---|---|---|---|---|---|---|
| | 1 | 2 | 3 | 4 | 5 | 6 | 7 | 8 | 9 | 10 |
| Taux pondéral de produit noble (%) .................... | 90,4 | 82,7 | 92,0 | 87,6 | 81,5 | 75,5 | 78,2 | 80,6 | 86,3 | 77,4 |
| Indice de viscosité (ml/g)... | 90 | 80 | 89 | 91 | 88 | 79 | 91 | 89 | 75 | 74 |
| Masse volumique apparente $(kg/m^3)$........................ | 560 | 540 | 550 | 545 | 560 | 565 | 545 | 565 | 585 | 575 |
| Diamètre moyen des particules $(\mu m)$........................... | 127 | 98 | 123 | 105 | 133 | 97 | 122 | 128 | 99 | 101 |
| Taux pondéral de fines particules (%)..................... | 2,6 | 0,8 | 2,1 | 1,2 | 4,5 | 6,3 | 4,9 | 5,6 | 1,9 | 5,2 |

TABLEAU 2

---

| | EXEMPLES SELON L'INVENTION | | | | | EXEMPLE COMPARATIF | EXEMPLES SELON L'INVENTION | | EXEMPLE COMPARATIF | EXEMPLES SELON L'INVENTION | | EXEMPLE COMPARATIF |
|---|---|---|---|---|---|---|---|---|---|---|---|---|
| | 11 | 12 | 13 | 14 | 15 | 16 | 17 | 18 | 19 | 20 | 21 | 22 |
| Taux pondéral de produit noble (%) ............... | 97,3 | 98,4 | 97,4 | 97,5 | 97,7 | 96,3 | 98,4 | 97,6 | 96,5 | 99,1 | 97,8 | 96,1 |
| Indice de viscosité (ml/g) | 111 | 111 | 111 | 110 | 110 | 110 | 81 | 80 | 80 | 122 | 129 | 127 |
| Masse volumique apparente (kg/m³) ................. | 580 | 590 | 600 | 610 | 590 | 590 | 600 | 560 | 610 | 560 | 560 | 550 |
| Diamètre moyen des particules (μm) .............. | 133 | 151 | 144 | 138 | 142 | 137 | 109 | 99 | 103 | 123 | 133 | 125 |
| Taux pondéral de fines particules (%) ........... | 1,8 | 1,3 | 1,5 | 1,2 | 1,7 | 2,6 | 2,7 | 2,5 | 3,5 | 0,8 | 1,1 | 1,5 |

EP 0 277 856 B1

TABLEAU 3

---

| | EXEMPLES SELON L'INVENTION | | | |
|---|---|---|---|---|
| | 23 | 24 | 25 | 26 |
| Taux pondéral de produit noble. (%) ..... | 97,4 | 97,5 | 97,9 | 98,2 |
| Indice de viscosité (ml/g).............. | 111 | 81 | 128 | 110 |
| Masse volumique apparente (kg/m³)....... | 600 | 600 | 530 | 600 |
| Diamètre moyen des particules (µm)...... | 134 | 93 | 125 | 129 |
| Taux pondéral de fines particules (%)... | 0,9 | 1,7 | 0,9 | 0,8 |

EP 0 277 856 B1

## Revendications

1. Procédé de préparation en masse de polymères et de copolymères à base de chlorure de vinyle, par polymérisation d'une composition monomère à base de chlorure de vinyle, caractérisé par le fait que l'on effectue au moins une partie de la réaction de polymérisation dans une zone de polymérisation délimitée par une paroi sensiblement sphérique, en réalisant, dans ladite zone de polymérisation, une circulation contrôlée et réglée du milieu réactionnel au moyen d'un ensemble-turbine à pales, entraîné en rotation, lesdites pales passant au voisinage de ladite paroi sur 10 à 60% de sa surface, le milieu réactionnel étant entraîné par la force centrifuge sur au moins une partie de la paroi sphérique dans un mouvement au moins partiellement ascendant et retombant, essentiellement sous l'action de la pesanteur, dans la partie centrale de la zone sphérique, en assurant ainsi un brassage intense et sans zone morte.

2. Procédé selon la revendication 1, caractérisé par le fait que l'on réalise la totalité de la réaction de polymérisation dans la zone de polymérisation délimitée par une paroi sensiblement sphérique.

3. Procédé selon la revendication 1, caractérisé par le fait que l'on réalise la réaction de polymérisation en deux étapes, effectuées dans des appareillages distincts, en réalisant en une première étape une opération de prépolymérisation sur une composition monomère à base de chlorure de vinyle et en une deuxième étape une opération finale de polymérisation, la première étape étant réalisée dans la zone de polymérisation délimitée par une paroi sensiblement sphérique.

4. Procédé selon la revendication 3, caractérisé par le fait que l'on réalise l'opération de prépolymérisation dans la zone de polymérisation délimitée par une paroi sensiblement sphérique jusqu'à ce que l'on obtienne un taux de conversion de la composition monomère de 3 à 15%, on ajoute éventuellement au milieu réactionnel une composition monomère complémentaire à base de chlorure de vinyle identique à ou différente de celle mise en oeuvre au cours de la première étape puis réalise, sur le milieu réactionnel ainsi formé, l'opération finale de polymérisation sous agitation lente.

5. Procédé selon la revendication 1, caractérisé par le fait que l'on réalise la réaction de polymérisation en deux étapes, effectuées dans des appareillages distincts, en réalisant en une première étape une opération de prépolymérisation sur une composition monomère à base de chlorure de vinyle et en une deuxième étape une opération finale de polymérisation, la deuxième étape étant réalisée dans la zone de polymérisation délimitée par une paroi sensiblement sphérique.

6. Procédé selon la revendication 5, caractérisé par le fait que l'on réalise l'opération de prépolymérisation sous agitation de turbulence élevée, jusqu'à ce que l'on obtienne un taux de conversion de la composition monomère de 3 à 15%, on ajoute éventuellement au milieu réactionnel une composition monomère complémentaire à base de chlorure de vinyle identique à ou différente de celle mise en oeuvre au cours de la première étape puis réalise, sur le milieu réactionnel ainsi formé, l'opération finale de polymérisation dans la zone de polymérisation délimitée par une paroi sensiblement sphérique.

## Claims

1. Process for the bulk preparation of vinyl chloride-based polymers and copolymers by polymerisation of a monomer composition based on vinyl chloride, characterised in that at least a part of the polymerisation reaction is carried out in a polymerisation zone bounded by a substantially spherical wall, while producing within the said polymerisation zone a controlled and regulated circulation of the reaction mixture by means of a bladed turbine assembly driven in rotation, the said blades passing in the vicinity of the said wall over 10 to 60% of its surface, the reaction mixture being driven by the centrifugal force over at least a part of the spherical wall in an at least partially rising and falling motion, essentially under the effect of gravity, in the central part of the spherical zone, thus ensuring intense stirring without any dead zone.

2. Process according to Claim 1, characterised in that the whole polymerisation reaction is carried out in the polymerisation zone bounded by a substantially spherical wall.

3. Process according to Claim 1, characterised in that the polymerisation reaction is carried out in two stages, performed in separate units of apparatus, a prepolymerisation operation being carried out in a first stage on a monomer composition based on vinyl chloride, and a final polymerisation operation in a second stage, the first stage being carried out in the polymerisation zone bounded by a substantially spherical wall.

4. Process according to Claim 3, characterised in that the prepolymerisation operation is carried out in the polymerisation zone bounded by a substantially spherical wall until a degree of conversion of the monomer composition of 3 to 15% is obtained, a supplementary monomer composition based on vinyl chloride which is

17

identical with or different from that used during the first stage is optionally added to the reaction mixture and the final polymerisation operation is then carried out with slow stirring on the reaction mixture thus formed.

5. Process according to Claim 1, characterised in that the polymerisation reaction is carried out in two stages, performed in separate units of apparatus, a prepolymerisation operation being carried out in a first stage on a monomer composition based on vinyl chloride and a final polymerisation operation in a second stage, the second stage being carried out in the polymerisation zone bounded by a substantially spherical wall.

6. Process according to Claim 5, characterised in that the prepolymerisation operation is carried out with high turbulence stirring until a degree of conversion of the monomer composition of 3 to 15% is obtained, a supplementary monomer composition based on vinyl chloride which is identical with or different from that used during the first stage is optionally added to the reaction mixture and the final polymerisation operation is then carried out on the reaction mixture thus formed in the polymerisation zone bounded by a substantially spherical wall.

## Patentansprüche

1. Verfahren zur Herstellung in Masse von Polymeren und Copolymeren auf der Basis von Vinylchlorid durch Polymerisation einer monomeren Masse auf der Basis von Vinylchlorid, dadurch gekennzeichnet, daß man mindestens einen Teil der Polymerisationsreaktion in einer Polymerisationszone durchführt, die durch eine im wesentlichen kugelförmige Wand begrenzt ist, wobei man in der erwähnten Polymerisationszone eine gesteuerte und geregelte Zirkulation des Reaktionsmediums erzeugt mit Hilfe einer Schaufelturbine, die durch Rotation angetrieben wird, wobei die Schaufeln in der Nähe der Wand über 10 bis 60% der Oberfläche hinweggehen, und wobei das Reaktionsmedium durch die Zentrifugalkraft über mindestens einen Teil der kugelförmigen Wand getrieben wird in einer Bewegung, die zumindest teilweise aufsteigend und wieder zurückfallend ist, im wesentlichen aufgrund der Wirkung der Schwerkraft im Mittelteil der kugelförmigen Zone, wodurch eine intensive Durchmischung ohne tote Zone sichergestellt wird.

2. Verfahren nach Anspruch 1, dadurch gekennzeichnet, daß man die gesamte Polymerisationsreaktion in der Polymerisationszone durchführt, die durch die im wesentlichen kugelförmige Wand begrenzt ist.

3. Verfahren nach Anspruch 1, dadurch gekennzeichnet, daß man die Polymerisationsreaktion in zwei Stufen durchführt in voneinander getrennten Vorrichtungen, wobei man in einer ersten Stufe eine Prepolymerisation einer monomeren Masse auf der Grundlage von Vinylchlorid und in der zweiten Stufe eine Endpolymerisation durchführt, wobei die erste Stufe in der Polymerisationszone durchgeführt wird, die durch die im wesentlichen kugelförmige Wand begrenzt ist.

4. Verfahren nach Anspruch 3, dadurch gekennzeichnet, daß man die Prepolymerisation in der Polymerisationszone durchführt, die von der im wesentlichen kugelförmigen Wand begrenzt ist, bis man einen Umwandlungsgrad der monomeren Masse von 3 bis 15% erreicht, und gegebenenfalls zu dem Reaktionsmedium eine ergänzende Monomermasse auf der Basis von Vinylchlorid zusetzt, die mit der während der ersten daraufhin durchgefährt Stufe eingesetzten identisch oder von ihr verschieden ist, in das so gebildete Reaktionsmedium und die Endpolymerisationsstufe unter langsamem Rühren durchfährt.

5. Verfahren nach Anspruch 1, dadurch gekennzeichnet, daß man die Polymerisationsreaktion in zwei Stufen durchführt, die in getrennten Vorrichtungen ablaufen, wobei man eine erste Prepolymeristionsstufe mit einer Monomermasse auf der Basis von Vinylchlorid und eine zweite Endpolymerisationsstufe durchführt, wobei die zweite Stufe durchgeführt wird in der Polymerisationszone, die durch die im wesentlichen kugelförmige Wand begrenzt wird.

6. Verfahren nach Anspruch 5, dadurch gekennzeichnet, daß man die Polymerisationsreaktion unter Rühren mit erhöhter Turbulenz durchführt, bis man einen Umwandlungsgrad der Monomermasse von 3 bis 15% erhält, und gegebenenfalls zu dem Reaktionsmedium eine ergänzende Monomermasse auf der Basis von Vinylchlorid zusetzt, die mit der im Verlauf der ersten Stufe eingesetzten identisch oder von ihr verschieden ist, und anschließend in dem so entstandenen Reaktionsmedium die Endpolymerisation in der Polymerisationszone durchführt, die durch die im wesentlichen kugelförmige Wand begrenzt ist.

## FIG.1a

## FIG.1b

## FIG.1c

## FIG.1d

# FIG. 2

# FIG. 3